# EUROPÄISCHE PATENTSCHRIFT

(11) **EP 3 630 545 B1**
(45) Veröffentlichungstag und Bekanntmachung des Hinweises auf die Patenterteilung: **06.01.2021**
(21) Anmeldenummer: 18728590.3
(22) Anmeldetag: 29.05.2018
(51) Int. Cl.: B60Q 5/00, G10K 15/02, H02P 29/00

(54) **VERFAHREN ZUR ERZEUGUNG VON FAHRGERÄUSCHEN, AKUSTIKREGLER UND KRAFTFAHRZEUG**
METHOD FOR GENERATING DRIVING NOISES, ACOUSTICS CONTROLLER AND MOTOR VEHICLE
PROCÉDÉ POUR GÉNÉRER DES ÉMISSIONS SONORES DE VÉHICULE, RÉGULATEUR ACOUSTIQUE ET VÉHICULE AUTOMOBILE

(30) Priorität: 01.06.2017 DE 102017209280
(43) Veröffentlichungstag der Anmeldung: 08.04.2020
(73) Patentinhaber: Audi AG, 85045 Ingolstadt (DE)
(72) Erfinder: KRAMMER, Johann, 86556 Kühbach (DE)
(86) Internationale Anmeldenummer: PCT/EP2018/063972
(87) Internationale Veröffentlichungsnummer: WO 2018/219885

(56) Entgegenhaltungen:
- DE-A1-102010 043 973
- DE-A1-102010 049 359
- DE-A1-102011 056 688
- US-A1- 2010 134 058

## Beschreibung

Die Erfindung betrifft ein Verfahren zur Erzeugung von Fahrgeräuschen, einen Akustikregler und ein Kraftfahrzeug.

Elektrisch betriebene Kraftfahrzeuge sind im Vergleich zu Kraftfahrzeugen mit einem Verbrennungsmotor leise. Dadurch sind sie von anderen Verkehrsteilnehmern akustisch nur schwer wahrzunehmen, was ein Risiko im Straßenverkehr darstellen kann. Um die Wahrnehmbarkeit elektrisch betriebene Kraftfahrzeuge und somit die Sicherheit der Verkehrsteilnehmer zu erhöhen, ist es beispielsweise ab September 2019 in den USA vorgeschrieben, vierrädrige Kraftfahrzeuge unter 4,5 t, mit einer Schallerzeugungsvorrichtung, auch "Sound Emitting Device" genannt, auszustatten, um die wegfallenden Motorengeräusche zu kompensieren. Dabei handelt es sich um einen Lautsprecher, welcher kontinuierlich ein Fahrgeräusch ausgibt.

Der Einbau eines entsprechenden Lautsprechers in ein Kraftfahrzeug ist jedoch mit einem technischen Aufwand verbunden und führt zu höheren Produktionskosten. Aus diesem Grund werden Verfahren und oder Vorrichtungen entwickelt, welche eine Schallerzeugung ermöglichen, ohne hierfür einen Lautsprecher bereitstellen zu müssen. Eine Art der Verfahren basiert auf einer Modulation von hochfrequenten elektrischen Signalen, wodurch Elektromotoren basierend auf dem physikalischen Effekt der Magnetostriktion Schall imitieren. Nachteilig an diesem Verfahren ist jedoch, dass sich die Anforderungen bezüglich der elektromagnetischen Verträglichkeit solcher Systeme nicht oder nur mit hohem Aufwand umsetzen lassen. Zudem werden die mittels Elektromotoren erzeugten hohen Töne von Menschen als unangenehm empfunden.

Nach dem Stand der Technik ist des Weiteren aus der DE 10 2011 056 688 A1 ein Kraftfahrzeug, insbesondere ein Hybrid- oder Elektrofahrzeug mit einem Elektromotor und einer Signalerzeugungseinrichtung bekannt. Die Signalerzeugungseinrichtung erzeugt in Abhängigkeit von einem Betriebszustand des Elektromotors, ein akustisches Signal. Dabei kann es vorgesehen sein, dass ein Karosserieelement zu Schwingungen angeregt wird.

In der DE 10 2008 040 139 A1 wird eine Anordnung zur Erzeugung eines simulierten Betriebsgeräusches eines Antriebsaggregats eines Fahrzeugs beschrieben. Dabei ist es vorgesehen, dass das Betriebsgeräusch unabhängig von der tatsächlichen Drehzahl und/oder der tatsächlichen Last des Antriebsartaggregats von einem Geräuschgenerator erzeugt oder beeinflusst wird.

In der DE 10 2011 000 175 A1 ist ein Kraftfahrzeug mit einer elektrischen Antriebseinrichtung beschrieben, welches eine Simulationseinrichtung umfasst. In einer bevorzugten Ausführung umfasst die Simulationseinrichtung einen Schwingungserzeuger, der Schwingungen erzeugt, um ein Verbrennungsmotor haptisch oder auditiv zu simulieren.

In der DE 10 2010 049 359 A1 ist ein Verfahren zur Ausgabe von akustischen Signalen offenbart. In dem Verfahren ist es vorgesehen, dass ein Strom und/oder eine Spannung einer elektrischen Maschine, welche eine leistungselektronische Regelung aufweist, durch Aufmodulieren des akustischen Signals derart gesteuert und/oder geregelt wird, dass zumindest eine Komponente der elektrischen Maschine in Schwingungen versetzt wird, welche dem akustischen Signal entsprechen.

In der US 2010/0134058 A1 sind ein Verfahren und ein System zur Erzeugung einer Vibration in einem Automobil beschrieben. In dem Verfahren ist es vorgesehen, dass ein elektrischer Motor des Automobils, welcher eine erste und eine zweite Komponente aufweist, mittels eines Stroms betrieben wird, sodass sich die zweite Komponente relativ zu der ersten Komponente bewegt. Dabei wird der Strom derart moduliert, dass der Elektromotor mit einer vorbestimmten Frequenz vibriert.

Es ist eine Aufgabe der Erfindung, eine Möglichkeit bereitzustellen, welche eine Ausgabe eines akustischen Signals mittels eines Elektromotors ermöglicht, welches dem eines Verbrennungsmotors ähnelt.

Erfindungsgemäß wird ein Verfahren zum Betreiben eines Elektromotors bereitgestellt. Dieses ist dadurch gekennzeichnet, dass ein fahrleistungsbezogener Drehmomentsollwert von einem Fahrdynamikregler an einen als Steuergerät ausgestalteten Akustikregler übertragen wird. Das fahrleistungsbezogene Drehmoment gibt das Antriebsmoment an, wie es der Fahrer oder ein Autopilot vorgibt. Ein Eingangswert zur Definition eines akustischen Signals wird von einer Steuereinheit an den Akustikregler übertragen. Von einer Leistungselektronik wird ein Phasenwinkel eines Rotors eines Elektromotors an den Akustikregler übertragen. Der Drehmomentsollwert ist ein Zeitsignal. Dem fahrleistungsbezogenen Drehmomentsollwert wird zur Erzeugung eines dynamischen Drehmomentsollwerts zumindest ein von dem Phasenwinkel des Rotors des Elektromotors abhängiges Drehmomenttaktmuster eines Verbrennungsmotors durch den Akustikregler aufmoduliert. Der dynamische Drehmomentsollwert ist derart beschaffen, dass ein Schall gemäß des Eingangswerts durch den Elektromotor und/oder einen Antriebstrang gemäß dem Eingangswert erzeugt wird. Der dynamische Drehmomentsollwert wird in einem letzten Schritt an eine Leistungselektronik übermittelt. Die Leistungslelektronik kann dann den Elektromotor steuern oder betreiben.

Mit anderen Worten wird ein fahrleistungsbezogener Drehmomentsollwert der Art durch einen Akustikregler moduliert, dass ein von dem Phasenwinkel des Motors abhängiger dynamischer Drehmomentsollwert dem Drehmomenttaktmuster eines Verbrennungsmotors entspricht. Der dynamische Drehmomentsollwert ist dabei so beschaffen, dass ein über eine Leistungselektronik angesteuerter Elektromotor und/oder Antriebsstrang ein Fahrgeräusch gemäß dem Eingangswert erzeugt. Somit wird durch den Elektromotor nicht nur ein Drehmoment gemäß dem fahrleistungsbezogenen Drehmomentsollwert bereitgestellt, sondern auch ein Drehmoment, welches in Abhängigkeit von dem Phasenwinkel des Rotors des Elektromotors einen vom fahrleistungsbezogenen Drehmomentsollwert abweichenden Wert aufweisen kann. Diese zyklischen Schwankungen des Drehmoments führen zu einer Schallabgabe durch den Elektromotor und/oder den Antriebsstrang. Die Modulation erfolgt dabei der Art, dass der Elektromotor und/oder der Antriebsstrang ein Fahrgeräusch ausgeben, welches den Anforderungen des Eingangswerts entspricht.

Beispielsweise kann im Rahmen des Verfahrens ein dynamischer Drehmomentsollwert an die Leistungselektronik übermittelt werden, welcher dem Drehmomenttaktmuster eines Dieselmotors entspricht, wobei der Eingangswert die Akustik eines Dieselmotors bei einem gleichen Betriebszustand des Kraftfahrzeugs wiedergibt. Es kann somit beispielsweise ein Fahrgeräusch mittels des Elektromotors erzeugt werden, welches dem eines Dieselmotors bei einer identischen Geschwindigkeit der Kraftfahrzeugs entspricht.

Dadurch ergibt sich der Vorteil, dass die Schallerzeugung durch einen Elektromotor und/oder einem Antriebsstrang erzeugt wird, wodurch das erzeugte Fahrgeräusch authentischer wirkt.

Eine Weiterbildung des Verfahrens sieht vor, dass der dynamische Drehmomentsollwert innerhalb mindestens eines Winkelbereichs einer vorbestimmten Periode des Phasenwinkels einen Wert aufweist, welcher kleiner ist als der leistungsbezogene Drehmomentsollwert und innerhalb mindestens eines weiteren Winkelbereichs der vorbestimmten Periode einen Wert aufweist, welcher größer ist als der fahrleistungsbezogene Drehmomentsollwert. Mit anderen Worten weist eine vorbestimmte Periode des Phasenwinkels mindestens zwei Winkelbereiche auf, wobei der dynamische Drehmomentsollwert in mindestens einem Winkelbereich unterhalb des Wertes des leistungsbezogenen Drehmomentsollwerts liegt und in mindestens einem Winkelbereich oberhalb des leistungsbezogenen Drehmomentsollwerts.

So kann beispielsweise der dynamische Drehmomentsollwert in einem Winkelbereich zwischen 0 und π (pi) über dem fahrleistungsbezogenen Drehmomentsollwert liegen und in einem Bereich von π bis 2 π unterhalb des fahrleistungsbezogenen Drehmoments.

Dadurch ergibt sich der Vorteil, dass ein Drehmomenttaktmuster einer Kurbelwelle eines durch einen Verbrennungsmotor angetriebenen Kraftfahrzeugs imitiert wird.

Eine Weiterbildung sieht vor, dass der statische Drehmomentsollwert ein Durchschnitt des dynamischen Drehmomentsollwerts über eine Periode ist. Mit anderen Worten verläuft die Amplitude des Drehmoments während einer Periode so, dass ein Durchschnitt des Drehmoments dem Wert des Anforderungsdrehmoments entspricht.

Dadurch ergibt sich der Vorteil, dass trotz der Modulation des Signals innerhalb einer Periode, dass statische Drehmoment bereitgestellt wird.

Eine Weiterbildung sieht vor, dass eine Periode mindestens zwei sich überlagernde Drehmomenttaktmuster umfasst, welche um einen Phasenversatz ΔΦ des Phasenwinkels zueinander verschoben sind. Mit anderen Worten umfasst der dynamische Drehmomentsollwert mindestens zwei um einen Phasenversatz ΔΦ verschobene Drehmomenttaktmuster.

So kann der der dynamische Drehmomentsollwert die Resultierende einer Überlagerung mehrerer Drehmomenttaktmuster eines Viertaktzylinders sein.

Dadurch ergibt sich der Vorteil, dass ein Drehmomenttaktmuster eines Mehrzylinderverbrennungsmotors und/oder dessen Akustik imitiert werden kann.

Eine Weiterbildung sieht vor, dass die Periode mit einem Faktor multipliziert wird, welcher abhängig ist von dem Eingangswert. Mit anderen Worten wird die Periode um einen Faktor gestaucht oder gestreckt, welcher abhängig ist von dem Eingangswert.

So ist es beispielsweise möglich, dass sich der Faktor ändert, sobald eine vorbestimmte Drehzahl überschritten wird. Dadurch ergibt sich der Vorteil, dass ein Umschaltverhalten eines Gangs imitiert werden kann.

Eine Weiterbildung sieht vor, dass die Periode derart definiert ist, dass der Antriebsstrang in eine Resonanzfrequenz angeregt wird. Mit anderen Worten wird die Periode auf eine Resonanzfrequenz des Antriebsstrang abgestimmt. Dadurch ergibt sich der Vorteil, dass der Antriebsstrang vibriert und somit ein Fahrgeräusch erzeugt.

Eine Weiterbildung sieht vor, dass der Eingangswert ein Betriebsparameter des Kraftfahrzeugs ist oder eine Audiodatei. Mit anderen Worten handelt es sich bei dem Eingangswert um einen Betriebsparameter des Kraftfahrzeugs, wie beispielsweise eine Geschwindigkeit oder eine Drehzahl, welchem ein bestimmtes Fahrgeräusch zugeordnet ist, oder eine Audiodatei. In der Audiodatei kann ein zu erzeugendes Geräusch definiert sein. Dadurch ergibt sich der Vorteil, dass ein vorgegebener Schall erzeugt werden kann.

Zu der Erfindung gehört auch der Akustikregler. Der Akustikregler weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch ein Kraftfahrzeug mit einem Akustikregler zur Durchführung eines der angeführten Verfahren.

Zu der Erfindung gehören auch Weiterbildungen des erfindungsgemäßen Akustikreglers und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Akustikreglers und des erfindungsgemäßen Kraftfahrzeugs hier nicht noch einmal beschrieben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Im Folgenden sind Ausführungsbeispiele der Erfindung beschrieben. Hierzu zeigt:
- Fig. 1: einen möglichen Ablauf einer Ausführungsform des erfindungsgemäßen Verfahrens; und
- Fig. 2: ein Diagramm mit einem dynamischen Drehmomentsollwert, aufgetragen gegen den Phasenwinkel Φ des Rotors.

In den Figuren sind funktionsgleiche Elemente jeweils mit denselben Bezugszeichen versehen.

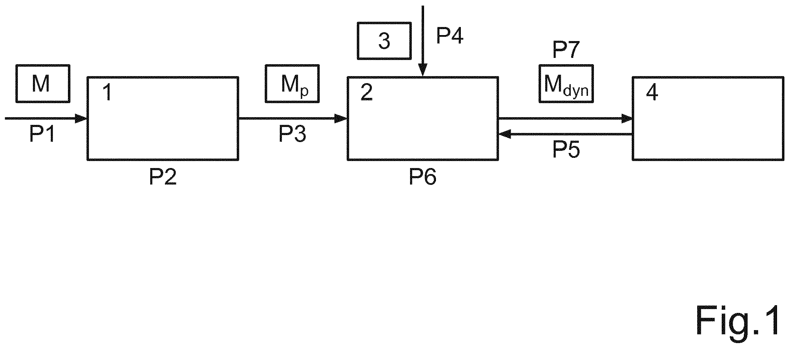

Fig. 1 zeigt einen möglichen Ablauf des Verfahrens. Ein angefordertes Antriebsdrehmoment M, kann in einem ersten Schritt P1 an einen Fahrdynamikregler 1 übertragen werden. Das Antriebsdrehmoment M kann beispielsweise von der Steuereinheit eines Autopiloten oder einem Fahrer mittels Betätigung eines Gaspedals des Kraftfahrzeugs Kfz angefordert werden. Ein Fahrdynamikregler 1 kann eine Steuereinheit sein, welche einen Mikrocontroller oder einen Mikroprozessor umfassen kann, welche ein von einem Fahrer angefordertes Drehmoment M der Art anpasst, dass eine optimierte Fahrdynamik des Kraftfahrzeugs Kfz ermöglicht werden kann, also insbesondere der Schlupf der Räder minimiert wird.

Es kann auf diese Weise ein fahrleistungsbezogener Drehmomentsollwert Mₚ erzeugt werden (Schritt P2). Der fahrleistungsbezogene Drehmomentsollwert Mₚ kann an einen Akustikregler 2 übermittelt werden (Schritt P3). Der Akustikregler 2 kann auch in einem Schritt P4 einen Eingangswert 3 und in einem Schritt P5 einen Phasenwinkel Φ eines Rotors eines Elektromotors empfangen. Der Eingangswert kann ein Betriebsparameter des Kraftfahrzeugs Kfz sein, wie beispielsweise eine Geschwindigkeit oder eine Drehzahl, welchem ein bestimmtes Fahrgeräusch zugeordnet ist, oder eine Audiodatei. Der Akustikregler 2 kann eine Steuereinheit sein, welche einen Mikrocontroller oder einen Mikroprozessor umfassen kann. Der Akustikregler 2 kann den fahrleistungsbezogenen Drehmomentsollwert Mₚ derart modulieren (Schritt P6), dass dieser ein Drehmomenttaktmuster eines Verbrennungsmotors aufweisen kann und diesen an eine Leistungselektronik 4 übermitteln (Schritt P7). Das bedeutet beispielsweise, dass ein dynamischer Drehmomentsollwert M_{dyn} abhängig sein kann von dem Phasenwinkel Φ des Rotors. So kann es sein, dass der dynamische Drehmomentsollwert M_{dyn} innerhalb mindestens eines Winkelbereichs einer vorbestimmten Periode des Phasenwinkels Φ einen Wert aufweisen kann, welcher kleiner ist, als der fahrleistungsbezogene Drehmomentsollwert Mₚ und mindestens einen Winkelbereich des Phasenwinkels Φ mit einem dynamischen Drehmomentsollwert M_{dyn}, der größer ist als der fahrleistungsbezogene Drehmomentsollwert Mₚ. Dabei kann es sein, dass ein durchschnittliches Drehmoment der Periode identisch ist mit dem leistungsbezogenen Drehmomentsollwert Mₚ. Eine vorbestimmte Periode kann beispielsweise ein vielfaches k einer kompletten Umdrehung des Rotors betragen, also k 2 π Dieser Faktor kann sich auch in Abhängigkeit von dem Eingangswert 3 ändern. Beispielsweise kann der Faktor k bei einer bestimmten Geschwindigkeit einen anderen Wert annehmen, um somit das Umschalten eines Gangs zu imitieren. Die Periode kann auch auf eine Resonanzfrequenz des Antriebsstrang abgestimmt sein. Der Verlauf des dynamischen Drehmomentsollwertes M_{dyn} kann sich auch aus mindestens zwei sich überlagernden Drehmomenttaktmuster zusammensetzen, welche um einen Phasenwinkel ΔΦ zueinander verschoben sein können. Somit kann beispielsweise ein dynamischer Drehmomentsollwert M_{dyn} eines Mehrzylindermotors imitiert werden. Die Modulation des leistungsbezogenen Drehmomentsollwertes kann beispielsweise frequenz- und/oder amplituden- und/oder phasenmoduliert sein. Dabei kann es sein, dass die Modulation derart erfolgt, dass mittels des Elektromotors und/oder des Antriebsstrangs ein Fahrgeräusch gemäß dem Eingangswert 3 erzeugt wird. Es ist beispielsweise möglich, einen dynamischen Drehmomentsollwert M_{dyn} zu erzeugen, welcher dem eines 8-Zylindermotors entspricht, also beispielsweise den Verlauf einer Überlagerung von acht Viertaktzylinderdrehmomenttaktmustern, welche zueinander um einen Phasenwinkel ΔΦ verschoben sein können. Die Modulation kann sich in Abhängigkeit von dem Eingangswert 3 ändern. So kann eine maximale Amplitude in Abhängigkeit von dem Eingangswert 4 skaliert sein um die Lautstärke regeln zu können.

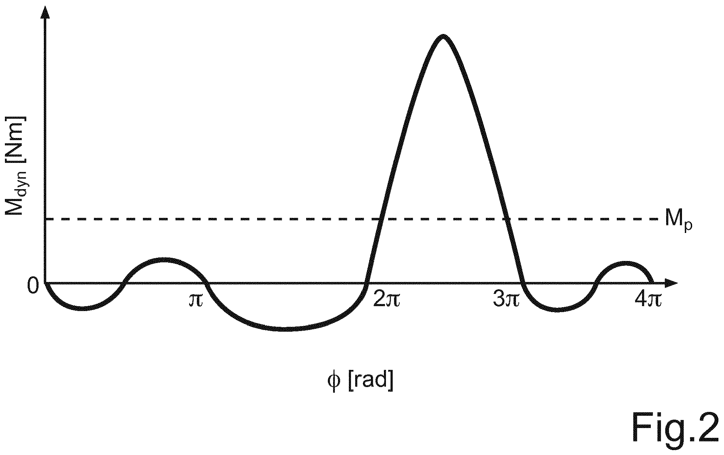

Fig. 2 zeigt einen möglichen Verlauf des dynamischen Drehmomentsollwertes M_{dyn}, aufgetragen gegen einen Phasenwinkel Φ des Rotors, welcher dem Phasenwinkel Φ einer Kurbelwelle entsprechen kann. Der Verlauf des dynamischen Drehmomentsollwerts M_{dyn} kann das Drehmomenttaktmuster eines Viertaktzylinders imitieren und verschiedene Winkelbereiche aufweisen. Eine Periode kann Winkelbereiche umfassen, in denen der dynamische Drehmomentsollwert M_{dyn} unterhalb des leistungsbezogenen Drehmomentsollwertes Mₚ liegt. Es kann sein, dass er ein negatives Drehmoment aufweisen kann, also dass der Rotor in diesem Bereich gebremst wird. Es kann sein, dass eine Periode einen Winkelbereich umfasst, der ein dynamisches Drehmoment aufweist, welches größer ist als der leistungsbezogene Drehmomentsollwert Mₚ. Der leistungsbezogene Drehmomentsollwert Mₚ kann das durchschnittliche Drehmoment einer Periode sein. Das dynamische Drehmoment M_{dyn} kann einem Drehmomenttaktmuster eines Viertaktzylinders nachempfunden sein, also in vier Bereiche unterteilt sein, welche der Ansaugphase, der Verdichtungsphase, der Arbeitsphase und der Ausstoßphase eines Viertaktzylinders entsprechen.

Insgesamt zeigen die Beispiele, wie durch die Erfindung Fahrgeräusche ohne eine Schallerzeugungsvorrichtung erzeugt werden können.

## Patentansprüche

1. Verfahren zum Betreiben eines Elektromotors, **dadurch gekennzeichnet, dass**
- ein fahrleistungsbezogener Drehmomentsollwert von einem Fahrdynamikregler (1) an einen als Steuergerät ausgestalteten Akustikregler (2) übertragen wird (P3),
- ein Eingangswert (3) zur Definition eines akustischen Signals von dem Akustikregler empfangen wird (P4),
- ein Phasenwinkel (Φ) eines Rotors des Elektromotors von einer Leistungselektronik (4) an den Akustikregler übertragen wird (P5),
- dem fahrleistungsbezogenen Drehmomentsollwert (Mₚ) zur Erzeugung eines dynamischen Drehmomentsollwerts zumindest ein von dem Phasenwinkel (Φ) des Rotors des Elektromotors abhängiges Drehmomenttaktmuster eines Verbrennungsmotors durch den Akustikregler (2) aufmoduliert wird, wobei der dynamischen Drehmomentsollwert (M_{dyn}) derart beschaffen ist, dass ein Schall gemäß dem Eingangswert (3) durch den Elektromotor und/oder eines Antriebsstrangs erzeugt wird (P6),
- der dynamische Drehmomentsollwert an eine Leistungselektronik (4) übermittelt wird (P7).

2. Verfahren nach Anspruch 1,
**dadurch gekennzeichnet, dass**
der dynamische Drehmomentsollwert (M_{dyn}) innerhalb mindestens eines Winkelbereichs einer vorbestimmten Periode des Phasenwinkels (Φ) einen Wert aufweist, welcher kleiner ist als der fahrleistungsbezogene Drehmomentsollwert (Mₚ), und innerhalb eines weiteren Winkelbereichs der vorbestimmten Periode einen Wert aufweist, welcher größer ist als der fahrleistungsbezogene Drehmomentsollwert (Mₚ).

3. Verfahren nach Anspruch 1 oder 2, **dadurch gekennzeichnet, dass** der fahrleistungsbezogenen Drehmomentsollwert (Mₚ) ein Durchschnitt des dynamischen Drehmomentsollwerts (M_{dyn}) über die Periode ist.

4. Verfahren nach einem der vorstehenden Ansprüche, **dadurch gekennzeichnet, dass** der dynamischen Drehmomentsollwert (M_{dyn}) mindestens zwei sich überlagernde Drehmomenttaktmuster umfasst, welche um einen Phasenversatz (ΔΦ) des Phasenwinkels (Φ) zueinander verschoben sind.

5. Verfahren nach einem der Ansprüche 2 bis 4, **dadurch gekennzeichnet, dass** die Periode mit einem Faktor (k) multipliziert wird, welcher abhängig ist von dem Eingangswert (3).

6. Verfahren nach einem der vorstehenden Ansprüche, **dadurch gekennzeichnet, dass** die Periode derart definiert ist, dass der Antriebsstrang in einer Resonanzfrequenz angeregt wird.

7. Verfahren nach einem der vorstehenden Ansprüche, **dadurch gekennzeichnet, dass** der Eingangswert (3) ein Betriebsparameter des Kraftfahrzeugs (Kfz) oder eine Audiodatei ist.

8. Akustikregler (2), der eine Prozessoreinrichtung aufweist, die zur Durchführung eines der vorstehenden Verfahren eingerichtet ist.

9. Kraftfahrzeug (Kfz) mit einem Akustikregler nach Anspruch 8.

## Claims

1. Method for operating an electric motor, **characterised in that**
- a driving-performance-related torque set point is transmitted by a drive dynamics controller (1) to an acoustic controller (2) configured as a control device (P3),
- an input value (3) for defining an acoustic signal is received by the acoustic controller (P4),
- a phase angle (Φ) of a rotor of the electric motor is transmitted by power electronics (4) to the acoustic controller (P5),
- at least one torque pattern of a combustion engine that is dependent on the phase angle (Φ) of the rotor of the electric motor is modulated by the acoustic controller (2) onto the driving-performance-related torque setpoint (Mₚ) to generate a dynamic torque set point, wherein the dynamic torque set point (M_{dyn}) is such that a sound is generated according to the input value (3) by the electric motor and/or a drive train (P6),
- the dynamic torque set point is transmitted to a power electronics (4) (P7).

2. Method according to claim 1,
**characterised in that**
the dynamic torque set point (M_{dyn}) within at least one angular range of a predefined period of the phase angle (Φ) has a value which is smaller than the driving-performance-related torque set point (Mₚ), and within a wider angular range of the prespecified period has a value which is greater than the driving-performance-related torque set point (Mₚ).

3. Method according to claim 1 or 2, **characterised in that** the driving-performance-related torque set point (Mₚ) is an average of the dynamic torque setpoint (M_{dyn}) over the period.

4. Method according to any of the preceding claims, **characterised in that** the dynamic torque set point (M_{dyn}) comprises at least two superimposed torque patterns, which are offset from each other by a phase offset (ΔΦ) of the phase angle (Φ).

5. Method according to any of claims 2 to 4, **characterised in that** the period is multiplied by a factor (k), which is dependent on the input value (3).

6. Method according to any of the preceding claims, **characterised in that** the period is defined such that the drive train is excited in a resonance frequency.

7. Method according to any of the preceding claims, **characterised in that** the input value (3) is an operating parameter of the motor vehicle (Kfz) or an audio file.

8. Acoustic controller (2), which has a processor device which is configured to perform one of the aforementioned methods

9. Motor vehicle (Kfz) comprising an acoustic controller according to claim 8.

## Revendications

1. Procédé pour faire fonctionner un moteur électrique, **caractérisé en ce que**
- une valeur de consigne de couple liée à la performance de conduite est transmise par un régulateur dynamique de conduite (1) à un régulateur acoustique (2) configuré comme dispositif de commande (P3),
- une valeur d'entrée (3) pour définir un signal acoustique est reçue par le régulateur acoustique (P4),
- un angle de phase (φ) d'un rotor du moteur électrique est transmis par une électronique de puissance (4) au régulateur acoustique (P5),
- à la valeur de consigne de couple liée à la performance de conduite (Mₚ) pour générer une valeur de consigne de couple dynamique, au moins un modèle de couple d'un moteur à combustion interne dépendant de l'angle de phase (φ) du rotor du moteur électrique est modulé par le régulateur acoustique (2), dans lequel valeur de consigne de couple dynamique (M_{dyn}) est obtenue de sorte qu'un son est généré en fonction de la valeur d'entrée (3) par le moteur électrique et/ou un groupe motopropulseur (P6),
- la valeur de consigne de couple dynamique est communiqué à une électronique de puissance (4) (P7).

2. Procédé selon la revendication 1,
**caractérisé en ce que**
au sein d'au moins une plage angulaire d'une période prédéterminée de l'angle de phase (φ), la valeur de consigne de couple dynamique (M_{dyn}) présente une valeur, laquelle est inférieure à la valeur de consigne de couple liée à la performance de conduite (Mₚ), et une valeur au sein d'une autre plage angulaire de la période prédéterminée, laquelle est supérieure à la valeur de consigne de couple liée à la performance de conduite (Mₚ).

3. Procédé selon l'une quelconque des revendications 1 ou 2, **caractérisé en ce que** la valeur de consigne de couple liée à la performance de conduite (Mₚ) est une moyenne de la valeur de consigne de couple dynamique (M_{dyn}) sur la période.

4. Procédé selon l'une quelconque des revendications précédentes, **caractérisé en ce que** la valeur de consigne de couple dynamique (M_{dyn}) comprend au moins deux modèles de mode de couple superposés, lesquels sont décalés l'un par rapport à l'autre selon un décalage de phase (ΔΦ) de l'angle de phase (φ).

5. Procédé selon l'une quelconque des revendications 2 à 4, **caractérisé en ce que** la période est multipliée par un facteur (k), lequel dépend de la valeur d'entrée (3).

6. Procédé selon l'une quelconque des revendications précédentes, **caractérisé en ce que** la période est définie de sorte que le groupe motopropulseur est excité à une fréquence de résonance.

7. Procédé selon l'une quelconque des revendications précédentes, **caractérisé en ce que** la valeur d'entrée (3) est un paramètre de fonctionnement du véhicule à moteur (Kfz) ou un fichier audio.

8. Régulateur acoustique (2), qui présente un appareil processeur, qui est configuré pour effectuer l'une quelconque des revendications précédentes.

9. Véhicule à moteur (Kfz) avec un régulateur acoustique selon la revendication 8.
